(19) Europäisches Patentamt
European Patent Office
Office européen des brevets

(11) Publication number: **0 417 759 A1**

# (12) EUROPEAN PATENT APPLICATION

(21) Application number: **90117549.7**

(51) Int. Cl.[5]: **C08L 81/02**, C08K 13/02

(22) Date of filing: **12.09.90**

(30) Priority: **13.09.89 US 406667**

(43) Date of publication of application: **20.03.91 Bulletin 91/12**

(84) Designated Contracting States: **AT BE CH DE ES FR GB IT LI NL**

(71) Applicant: **PHILLIPS PETROLEUM COMPANY**
**5th and Keeler**
**Bartlesville Oklahoma 74004(US)**

(72) Inventor: **Harry, Nathaniel**
**25480 Catalina**
**Southfield, MI 48075(US)**

(74) Representative: **Geissler, Bernhard, Dr. jur., Dipl.-Phys. Patent- und Rechtsanwälte et al**
**Bardehle-Pagenberg-Dost-Altenburg-Frohwitter-Geissler & Partner**
**Postfach 86 06 20**
**W-8000 München 86(DE)**

## (54) Poly (arylene sulfide) compositions containing molecular sieves.

(57) A composition comprising cured poly(arylene sulfide), glass fiber and molecular sieves and a method for making same. A second embodiment of the invention is a composition comprising poly(arylene sulfide), glass fiber, calcium sulfate and molecular sieves and a method for making same.

EP 0 417 759 A1

Xerox Copy Centre

# POLY(ARYLENE SULFIDE) COMPOSITIONS CONTAINING MOLECULAR SIEVES

## Background of the Invention

This application is a continuation-in-part of application Serial No. 07/406,667, filed September 13, 1989.

This invention relates to poly(arylene sulfide) compositions. In one aspect it relates to poly(arylene sulfide) compositions containing molecular sieves. In another aspect it relates to poly(arylene sulfide) compositions having reduced mold cycle time. In yet another aspect it relates to poly(arylene sulfide) compositions having improved electrical insulation and strength characteristics.

One of the important uses of poly(arylene sulfide) is in molding compositions. By combining poly(arylene sulfide) with reinforcing agents such as glass fibers and optionally fillers, molding compositions can be tailored for specific end uses. An important consideration in the molding of poly(arylene sulfide) compositions is the mold cycle time. The mold cycle time is the tine required for a part to be injected and cooled before it can be ejected from the mold and a dimensionally acceptable part obtained. If a poly(arylene sulfide) part is ejected before optimum cooling, the part will expand and become larger than the mold it was molded in. Reduction of mold cycle time permits the part manufacturer to increase the production rate of parts and improve economics. It is now been found that addition of molecular sieves to poly(arylene sulfide) compositions enables reduction of mold cycle time.

Another important use of poly(arylene sulfide) is in electrical insulation materials. However, improving the electrical insulation characteristics of poly(arylene sulfide) compositions must be accomplished without sacrificing strength of the resulting parts.

Carbonization of poly(arylene sulfide) electrical insulation materials can occur under the influence of high electrical potential. In application the surface of an insulator typically accumulates dust, moisture, oils and so on. This accumulation of contaminants can create a conductive layer on the outer surface of the insulation material which, under the influence of sufficient potential drop, will "break down electrically" thus allowing the passage of current through the conductive layer and along the insulation surface. Heat, generated bv the resistive dissipation of electrical energy as current passes through the conductive layer, causes decomposition or evaporation of the conductive medium. The passage of current, which may last for only a very short period of time, often exists in the form of an electrical arc across the surface of the insulator. The resultant high temperature along the current path promotes carbonization of carbonizable insulation material. This carbonization produces a carbon path which, if allowed to develop under the influence of successive surface tracking breakdown cycles, will ultimately produce a continuously conductive path which in turn will allow the continuous passage or leakage of current along the surface of poly(arylene sulfide) insulation material.

The resistance of an electrical insulation material to carbonization and the formation of conductive tracks can be measured by a comparative tracking index (CTI) test. It is now been found that addition of molecular sieves to filled poly(arylene sulfide) compositions improves the electrical insulation characteristics of molded parts, as measured by CTI, while maintaining or improving the strength characteristics of the molded parts.

## Summary of the Invention

It is an object of the invention to provide poly(arylene sulfide) compositions having reduced mold cycle times. It is a further object of the invention to improve the resistance of poly(arylene sulfide) compositions to carbonization and track formation.

According to the invention, a composition is provided which has among its components 40-80 weight percent of a cured poly(arylene sulfide), 25-60 weight percent glass fiber and 0.1-15 weight percent molecular sieves. In a further embodiment, the composition contains at least one other additive selected from organosilanes, polyethylene, pigments, hydrotalcites and nucleating agents. In a further embodiment, the poly(arylene sulfide) of the composition is an essentially linear, high molecular weight polymer prior to curing. In a still further embodiment, about 1 to about 25 weight percent based on the total composition of the poly(arylene sulfide) is an essentially linear, low molecular weight polymer prior to curing.

Further according to the invention, a composition is provided which has among its components, 25-65 weight percent poly(arylene sulfide), 20-50 weight percent glass fiber, 10-40 weight percent calcium sulfate

and 0.1-15 weight percent molecular sieves. In a further embodiment, the composition contains at least one other additive selected from organosilanes, polyethylene, pigments, hydrotalcites and lithium carbonate.

Further according to the invention, processes for making each of the above-defined compositions are provided.

Further according to the invention, an article of manufacture, more specifically a molded article, is formed from each of the above-defined compositions.

## Brief Description of the Drawings

Figure 1 is a plot demonstrating the effect on mold cycle time of addition of different types of molecular sieves for compositions described in Example I.

Figure 2 is a plot demonstrating the effect on mold cycle time of the level of molecular sieve of a particular type for compositions described in Example I.

Figure 3 is a plot comparing the effect on mold cycle time of molecular sieve and nucleating agent for compositions described in Example I.

Figure 4 is a plot demonstrating the effect on mold cycle time of addition of different types of molecular sieves for compositions described in Example II.

Figure 5 is a plot demonstrating the effect on mold cycle time of the level of molecular sieve of a particular type for compositions described in Example II.

The figures demonstrate that the addition of molecular sieve to poly(arylene sulfide) compositions results in reduction of the mold cycle time for each of the compositions tested.

## Detailed Description of the Invention

This invention relates to poly(arylene sulfide) compositions which contain molecular sieves. The term poly(arylene sulfide) is intended to designate arylene sulfide polymers. The scope of this invention broadly encompasses all such polymers.

Suitable poly(arylene sulfide) polymers include, but are not limited to those described in U.S. Patent No. 3,354,129 and U.S. Patent No. 3,919,177. Examples of poly(arylene sulfide) polymers suitable for purposes of this invention include poly(2,4-tolylene sulfide), poly(4,4′-biphenylene sulfide) and poly(phenylene sulfide). Because of its availability and desirable properties (such as high chemical resistance, non-flammability, and high strength and hardness) poly(phenylene sulfide) is the presently preferred poly(arylene sulfide).

Molecular sieves suitable for the invention are crystalline zeolites which are both naturally occuring and synthetically produced. Molecular sieves can be represented by the structural formula

$Me_{x/n}[(AlO_2)_x(SiO_2)_y] \cdot M\ H_2O$

wherein Me is a metal cation of n valence, and x, y and M are integers. This formula applies to one unit cell of the zeolite structure. The portion of the formula in brackets discloses the framework composition with the ratio of y/x varying between 1 and 5. Although similar in composition, the molecular sieves are completely different from the gel-type amorphous alumino-silicates commonly referred to as zeolites. These latter materials have the same broad spectrum of pore sizes as silica gels, typically from 20 to 10,000 angstroms, and do not exhibit any selectivity based on molecular size.

The commerically available molecular sieves are synthetically produced and can be obtained from the Union Carbide Corporation. Among the commercially available molecular sieves, the fundamental types are based on the Type A and Type X synthetic zeolites. The commercially available molecular sieves are obtained in the anhydrous state with the water of hydration having been removed. Although the molecular sieves of the invention are not limited to being in the anhydrous form, the anhydrous form is presently preferred. The commercially available molecular sieves are available in powder, pellet and bead forms. The pellet and bead forms generally contain about 20 percent inert clay binder.

Examples of commercially available molecular sieves from the Union Carbide Corporation are types 3A, 4A, 5A and 13X which have nominal pore diameters of 3, 4, 5 and 10 angstroms respectively. The type 4A molecular sieve has the structural formula

$Na_{12}[(AlO_2)_{12}(SiO_2)_{12}] \cdot 27\ H_2O$.

The type 5A molecular sieve is obtained by replacement of the sodium ions in type 4A with calcium ions.

The type 13X molecular sieve has the structural formula $Na_{86}[(AlO_2)_{86}(SiO_2)_{106}]\cdot 276\ H_2O$.

The glass fiber useful in the present invention can be chosen from any of those products commercially available which generally find use as fillers and reinforcing agents in polymeric compositions. Generally, glass fibers of about 1/8 to about 2 inches in length are incorporated.

The compositions of the invention can optionally contain an organosilane compound selected from epoxy functional, amino functional, mecapto functional and alkyl functional silanes and organo functional polysulfide silanes. The organo functional polysulfide silanes have the general formula

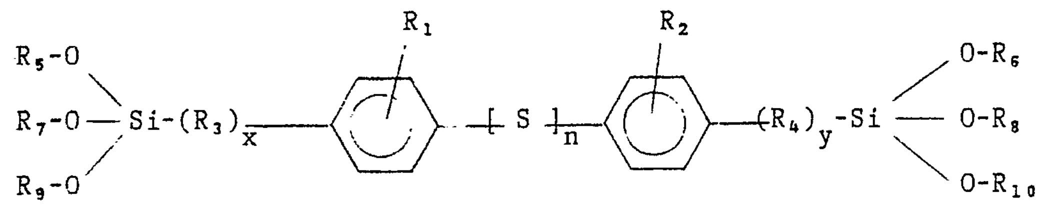

(I)

The number of sulfur atoms (S) linking the two aromatic groups determined by the value of n which represents a positive integer and ranges from 1 to 30. A subgenus within the scope of this invention is represented by the above formula wherein n ranges from 1 to 10. The preferred value of n is from 1 to 5.

Each of $R_1$ and $R_2$ is H or an alkyl group having 1 to 30 carbon atoms. Each of $R_5$, $R_6$, $R_7$, $R_6$, $R_9$ and $R_{10}$ is an alkyl group having from 1 to 30 carbon atoms. The alkyl groups associated with $R_1$, $R_2$, $R_5$, $R_6$, $R_7$, $R_8$, $R_9$ and $R_{10}$ can be linear (e.g. n-propyl) or branched (e.g. tert-butyl).

Each of the letters x and y represent either 1 or 0. When $x = 0$, $R_3$ is absent from formula I and the Si bond extends to a carbon member of the corresponding aromatic ring. When $x = 1$, $R_3$ is as defined below. In a similar manner when $y = 0$, $R_4$ is absent from formula I and the Si bond extends to a carbon member of the corresponding aromatic ring. When $y = 1$, $R_4$ is as defined below. Each of $R_3$ and $R_4$, when present (i.e. when $x = 1$, $y = 1$), is an alkylene group having from 1 to 30 carbon atoms. The alkylene group can be linear or branched.

The preferred organo functional polysulfide silane has the formula

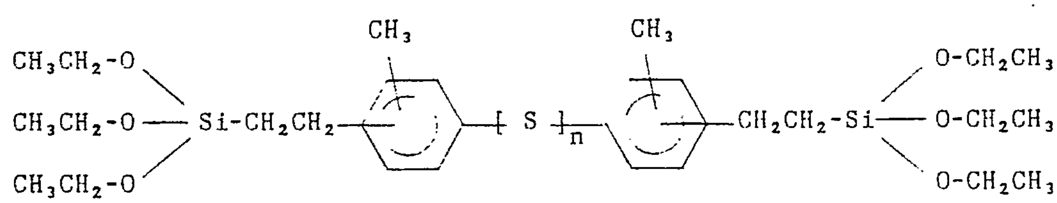

(II)

wherein the average value of n is about 2 to about 4 and preferably about 2.8. The preferred organo functional polysulfide silane is available from Union Carbide and sold as Y9194.

The other functional silanes arc preferably trialkoxysilanes which contain the particular functional groups. Examples of such trialkoxysilanes include gamma-glycidoxypropyltrimethoxysilane, 3-mercaptopropyltrimethoxysilane, 3-aminopropyltriethoxysilane, N-beta-(aminoethyl)-gamma-aminopropyltrimethoxysilane, methyltrimethoxysilane and tetrapropoxysiiane.

Such organosilanes will generally be present in the compositions of the invention in an amount of from about 0.01 to about 2 weight percent, preferably from about 0.4 to about 1.2 weight percent, and most preferably from about 0.6 to about 1.0 weight percent based on the weight of the total composition.

As is usual in polymeric compositions based on poly(arylene sulfide), a variety of other additives can optionally be used in minor amounts up to about 2 weight percent of the total composition. These additives include such materials as polyethylene, pigments, hydrotalcites, nucleating agents and lithium carbonate.

The pigments employed in the compositions are those conventionally known which can tolerate the relatively high processing temperatures required, e.g. 600F, for poly(arylene sulfide). Typical examples include titanium dioxide, iron oxide, cadmium sulfide, phthalocyanine blue, carbon black and the like and mixtures thereof.

The hydrotalcites employed in the compositions can be a natural or synthetic material which corresponds roughly to naturally-occuring minerals having chemical structures such as $Mg_6Al_2(OH)_{16}CO_3\cdot 4\ H_2O$ or $Al_2O_3\cdot 6\ MgO\cdot CO_2\cdot 12\ H_2O$. Although the magnesium/aluminum hydrates are the most common

cationic species for the hydrotalcites, various metals can be substituted. For example, magnesium can be replaced by calcium, zinc, copper, manganese, lithium or nickel; and aluminum can be replaced by chromium (plus 3) or iron. The anionic species can also vary, with carbonate or phosphate the most likely candidates. The most readily available hydrotalcite compounds will be magnesium-aluminum hydroxy carbonate hydrates. The preferred hydrotalcite compound is magnesium aluminum hydroxy carbonate hydrate. which is available under the commercial name DHT-4A sold by Kyowa Chemical Industry Company, Ltd., Osaha, Japan, which is characterized by the manufacturer as $Mg_{4.5}Al_2(OH)_{13}CO_3 \cdot 3.5\ H_2O$.

The nucleating agents which can be employed in this invention are any additive which is effective to achieve the crystalline morphology modification of the poly(arylene sulfide). Usually the additive will comprise a polymer containing additive since polymers are expected to be readily compatible. Usually, it will also be crystallizable and have a high crystalline melting point, since crystallization of the additive is thought to be important for the action of the nucleating agent. Polymers selected from the group consisting of poly(arylene sulfide-ketone) and a polyaryl ketone are most preferred. The preferred polyaryl ketone is a poly(ether ether ketone) and a preferred poly(ether ether ketone) is poly(1,4-oxyphenyloxy-p,p′-benzophenone). Such a polymer is commercially available from ICI. It is also preferred that the poly(arylene sulfide-ketone) or polyaryl ketone have a melting point of at least about 20° C above the melting point of the poly(arylene sulfide) and more preferably at least about 40° to about 100° C above the poly(arylene sulfide) melting point.

The compositions of this invention can be made in accordance with any method wherein the poly(arylene sulfide), glass fiber, molecular sieves and other components (if any) are combined to form a mixture. Many suitable methods are well known to those of skill in the art. By way of example, the components of the composition can be mixed together at room temperature in a rotating drum blender or in an intensive mixer, such as a Henschel mixer, and then extrusion compounds and pelletized at a temperature above about the melting point of the poly(arylene sulfide) to produce a uniform blend.

Once made, the compositions of the invention can be used to form molded articles in accordance with any method suitable for molding thermoplastic compositions. Such methods are well known in the art. The compositions can, for example, be introduced into an injection molding apparatus to produce a melt which is extruded into an injection mold wherein the molded article is formed.

A first embodiment of the invention is a composition comprising 40-80 weight percent of a cured poly(arylene sulfide), 25-60 weight percent glass fiber and 0.1-15 weight percent molecular sieves.

The cured poly(arylene sulfide) of the composition is preferably present in an amount of about 45 to about 70 weight percent and most preferably about 50 to 60 weight percent based on the total composition.

Curing is defined herein as a distinct process step after polymer drying comprising a thermal treatment of the polymer in the presence of an oxygen-containing atmosphere. The preferred oxygen-containing atmosphere is air. In one curing process, the treatment can be above the melting point for semi-crystalline polymers or alternately, the treatment can be above the softening point for amorphous polymers. A second curing process is a solid state process in which the polymer is heated to a temperature up to but below the melting point of a semi-crystalline polymer or alternately, up to but below the softening point of an amorphous polymer. The solid state curing process is currently preferred for curing large quantities of polymer, such as in a commercial process. For example, the solid state curing of poly(phenylene sulfide), which has a melting point of about 540F, is generally carried out at a temperature of about 350F to about 500F.

The glass fiber of the composition is defined above and is preferably present in an amount of about 30 to about 55 weight percent and most preferably about 35 to about 45 weight percent based on the total composition.

The molecular sieves of the composition are defined above and are preferably present in an amount of about 1 to about 10 weight percent and most preferably about 2 to about 7 weight percent based on the total composition.

The composition optionally contains at least one additive selected from the group consisting of organosilanes, polyethylene, pigments, hydrotalcites, lithium carbonate and nucleating agents. When an organosilane is used, an epoxy functional silane is preferred. The preferred epoxy functional silane is gamma-glycidoxypropyltrimethoxysilane. If a polyethylene is used, a high density polyethylene is preferred.

In a preferred embodiment, the poly(arylene sulfide) of the composition is an essentially linear, high molecular weight polymer prior to curing. Essentially linear poly(arylene sulfide), as used herein, is defined as a polymer having no branching or such a small amount of branching as to have substantially no effect on the polymer properties. For example, the amount of polyhaloaromatic impurity found in the dihaloaromatic used in the poly(arylene sulfide) polymerization process would not be sufficient to cause the resultant poly(arylene sulfide) to be outside the essentially linear definition).

The essentially linear, high molecular weight poly(arylene sulfide) can be prepared by the process of U.S. Patent No. 3,919,177, which is incorporated by reference herein, but any process which produces an essentially linear, high molecular weight poly(arylene sulfide) is acceptable. The preferred essentially linear, high molecular weight poly(arylene sulfide) is poly(phenylene sulfide). The melt flow of the essentially linear, high molecular weight poly(phenylene sulfide) is less than about 1000, preferably about 250 to about 650, and most preferably about 350 to about 550 prior to curing and about 50 to about 400, preferably about 150 to about 300, most preferably about 215 to about 250, after curing. The melt flow of all poly-(phenylene sulfide) polymers referred to herein is determined using ASTM D 1238-86 condition 315/5.0 modified to use a 5 minute preheat time.

In a further preferred embodiment, the essentially linear, high molecular weight poly(arylene sulfide) can optionally be acid washed during the poly(arylene sulfide) recovery process according to a process similar to that disclosed in U.S. Patent No. 4,801,664. Any suitable organic or inorganic acid which is water soluble can be used in the acid washing process. Examples of suitable organic acids include, but are not limited to, acetic acid, formic acid, oxalic acid, fumaric acid, and monopotassium phthalic acid. The presently preferred organic acid is acetic acid. Examples of suitable inorganic acids include, but are not limited to, hydrochloric acid, monoammonium phosphate, sulfuric acid, phosphoric acid, boric acid, nitric acid, sodium dihydrogenphosphate, ammonium dihydrogenphosphate, and carbonic acid. The presently preferred inorganic acid is hydrochloric acid.

In a further preferred embodiment, about 1 to about 25 weight percent, preferably about 5 to about 20 weight percent, based on the total composition of the 40-80 weight percent cured poly(arylene sulfide) is an essentially linear, low molecular weight poly(arylene sulfide) prior to curing. The remainder of the 40-80 weight percent cured poly(arylene sulfide) is the above described essentially linear, high molecular weight poly(arylene sulfide) prior to curing. In a currently preferred embodiment of the invention, the melt flow of the mixture of essentially linear, high molecular weight poly(arylene sulfide) and essentially linear, low molecular weight poly(arylene sulfide) after curing is about 200 to about 350, preferably about 215 to about 250.

The essentially linear, low molecular weight poly(arylene sulfide) can be prepared by the process of U.S. Patent No. 3,354,129 which is incorporated by reference herein, but any process which produces an essentially linear, low molecular weight poly(arylene sulfide) is acceptable. The preferred essentially linear, low molecular weight poly(arylene sulfide) is poly(phenylene sulfide). The melt flow of the essentially linear, low molecular weight poly(phenylene sulfide) is about 3,000 to about 8,000 prior to curing and about 25 to about 200, preferably about 50 to about 150, after curing.

In a further preferred embodiment, the glass fiber of the composition, as described above, has a diameter of less than about 13 microns. The presently preferred glass fiber is G-filament type glass fiber. An example of a G-filament type glass fiber is Owens Corning 497EE which has an average diameter of about 9 microns.

A second embodiment of the invention is a composition comprising 25-65 weight percent poly(arylene sulfide), 20-50 weight percent glass fiber, 10-40 weight percent calcium sulfate and 0.1-15 weight percent molecular sieves.

The poly(arylene sulfide) of the composition can be cured or uncured and is preferably present in an amount of about 30 to about 55 weight percent and most preferably about 35 to about 45 weight percent based on the total composition. In a currently preferred embodiment of the invention the poly(arylene sulfide) is cured and the melt flow of the poly(arylene sulfide) is about 3000 to about 8000 prior to curing and about 750 to about 950 after curing.

The glass fiber of the composition is defined above and is preferably present in an amount of about 25 to about 45 weight percent and most preferably about 30 to about 40 weight percent based on the total composition.

The molecular sieves of the composition are defined above and are preferably present in an amount of about 1 to about 10 weight percent, and most preferably about 2 to about 7 weight percent based on the total composition.

The calcium sulfate useful in this invention can be chosen front among any of those products commercially available which are generally used as fillers in various polymeric blends. The calcium sulfate will have an averge particle size within the range of about 0.5 micron up to about 10 microns and preferably will have an average particle size in the range of about 0.5 micron up to about 5 microns. The finely divided calcium sulfate that will usually be employed in the composition is a commercially available material of which typically, 98 weight percent passes through a 20 micron screen and the average particle size is 1.4 microns. A typical chemical analysis shows the material to comprise about 97.7 weight percent $CaSO_4$ with the major impurity of $CaCO_3 \cdot MgCO_3$ consisting of about 1.3 weight percent. The remaining impurities

comprise silica, metal oxides and water totaling about 1 weight percent.

The calcium sulfate of the composition is preferably present in an amount of about 15 to about 35 weight percent and most preferable about 20 to about 30 weight percent based on the total composition.

The composition optionally contains at least one additive selected from the group consisting of organosilanes, polyethylene, pigments, hydrotalcites and lithium carbonate. When an organosilane is used, an organo functional polysulfide silane is preferred. The preferred organo functional polysulfide silane has the formula

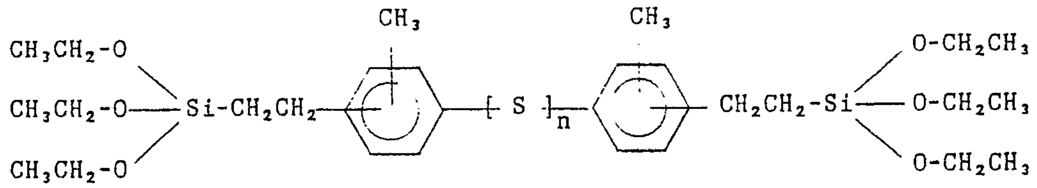

(II)

wherein the average value of n is about 2 to about 4 and preferably about 2.8. If a polyethylene is used, a high density polyethylene is preferred.

## Examples

## Example I

In this example, eleven poly(phenylene sulfide) compositions (identified as compositions 1-11) are compared to determine the effect of molecular sieves on mold cycle time. Compositions 1-5 were prepared to determine the effect of the type of molecular sieve on mold cycle time. Compositions 4 and 6-8 were prepared to determine the effect of the level of molecular sieve on mold cycle time. Compositions 9-11 were prepared to determine the effect of molecular sieves alone compared to the effect of nucleating agent on mold cycle time. The components of each composition are given in Table I.

Each composition was prepared as follows. The specified components except for the glass fiber were charged and dry blended in a Henschel mixer for about 3 minutes at ambient temperature. The glass fiber was then added to the Henschel mixer and mixed for about 10 seconds. The mixture was then pelletized using a Crown compounding extruder with an extruder temperature of 600-650F. The pelletized product was injection molded using a 75 ton vertical clamp Newbury molding machine (extruder temperature of 600-625F and mold temperature of 275-300F) into a 1/4 inch thick x 5 inch diameter disc mold to determine mold cycle time.

The mold cycle time test was conducted by ejecting the injection molded part at various cooling times and measuring the part thickness to determine the part's dimensions. As the cooling time increases, the part approaches the dimensions of the mold the part was molded in. The mold cycle time is the total time (injection plus cooling) for which the molded part repeatably reproduces the mold dimensions. Assuming a constant injection time, the cooling time is an excellent method of comparing mold cycle times for different compositions.

Figure 1 is a plot of part thickness v. cooling time for compositions 1-5. Figure 2 is a plot of part thickness v. cooling time for compositions 4 and 6-8. Figure 3 is a plot of part thickness v. cooling time for compositions 9-11.

Figure 1 shows that the addition of 5 weight percent molecular sieves results in reduced mold cycle time as evidenced by the lower cooling time required to obtain a dimensionally stable part (compositions 2-5 versus composition 1). In addition, the type A molecular sieves (compositions 2, 3 and 4) are significantly better than type X molecular sieve (composition 5).

Figure 2 shows that the addition of 3, 5 and 7 weight percent type 5A molecular sieve to compositions 4, 6 and 7 respectively results in reduced mold cycle time as evidenced by the lower cooling time required to obtain a dimensionally stable part (compositions 4, 6 and 7 versus compositions 1 and 8). Composition 8 contains a slightly higher glass fiber loading than composition 1 and it is unknown why the part thickness of composition 8 did not reach the mold thickness.

Figure 3 shows that the addition of 2 weight percent type 5A molecular sieve and no nucleating agent (composition 11) results in reduced mold cycle time as evidenced by the lower cooling time required to obtain a dimensionally stable part. Composition 11 is significantly better than the control (composition 9) containing no molecular sieve and no nucleating agent. In addition, composition 11 is better than the control (composition 10) containing a nucleating agent but no molecular sieve.

Table I

| Weight Percentages of Components[a] | | | | | | | | |
|---|---|---|---|---|---|---|---|---|
| Composition | PPS[b] | Glass Fiber[c] | Molecular Sieve | Organosilane[d] | PEEK[e] | PE[f] | Pigment[g] | Hydrotalcite[h] |
| 1[i] | 56.7 | 40 | -- | 0.8 | 0.75 | 0.25 | 0.5 | 1.0 |
| 2 | 51.7 | 40 | 5[j] | 0.8 | 0.75 | 0.25 | 0.5 | 1.0 |
| 3 | 51.7 | 40 | 5[k] | 0.8 | 0.75 | 0.25 | 0.5 | 1.0 |
| 4 | 51.7 | 40 | 5[l] | 0.8 | 0.75 | 0.25 | 0.5 | 1.0 |
| 5 | 51.7 | 40 | 5[m] | 0.8 | 0.75 | 0.25 | 0.5 | 1.0 |
| 6 | 53.7 | 40 | 3[l] | 0.8 | 0.75 | 0.25 | 0.5 | 1.0 |
| 7 | 49.7 | 40 | 7[l] | 0.8 | 0.75 | 0.25 | 0.5 | 1.0 |
| 8[i] | 51.7 | 45 | -- | 0.8 | 0.75 | 0.25 | 0.5 | 1.0 |
| 9[i] | 57.45 | 40[n] | -- | 0.8 | -- | 0.25 | 0.5 | 1.0 |
| 10[i] | 56.7 | 40[n] | -- | 0.8 | 0.75 | 0.25 | 0.5 | 1.0 |
| 11 | 55.45 | 40[n] | 2[l] | 0.8 | -- | 0.25 | 0.5 | 1.0 |

(a) The weight percentages are based on the total weight of the components in the composition
(b) Cured Ryton® poly(phenylene sulfide), Phillips 66 Company; Grade Pr-20; Compositions 1-8: melt flow = 250g/10 min.; Compositions 9-11: melt flow = 215.8 g/10 min.
(c) PPG Grade 3520 except where noted
(d) Union Carbide TC-100 gamma-glycidoxypropyltrimethoxy silane
(e) Poly(ether ether ketone) from ICI used as a nucleating agent
(f) Marlex® high density polyethylene Grade TR-161, Phillips 66 Company having nominal melt index of 30 measured using ASTM D 1238-86 Condition 190/2.16.
(g) Carbon Black N110, Phillips 66 Company
(h) DHT-4A, Kyowa Chemical Industry Co., Ltd
(i) Control
(j) Union Carbide Molecular Sieve type 3A powder
(k) Union Carbide Molecular Sieve type 4A powder
(l) Union Carbide Molecular Sieve type 5A powder
(m) Union Carbide Molecular Sieve type 13X powder
(n) Owens Corning Grade 497

## Example II

In this example, seven poly(phenylene sulfide) compositions (identified as compositions 12-18) are compared to determine the effect of molecular sieves on mold cycle time for compositions containing calcium sulfate. Compositions 12-16 were prepared to determine the effect of the type of molecular sieve on mold cycle time. Compositions 12 and 16-18 were prepared to determine the effect of the level of molecular sieve on mold cycle time. The components of each composition are given in Table II.

Each composition was prepared according to the procedure described in Example I. The mold cycle time test was the same as that described in Example I.

Figure 4 is a plot of part thickness v. cooling time for compositions 12-16. Figure 5 is a plot of part thickness v. cooling time for compositions 12 and 16-18.

Figure 4 shows the addition of 3 weight percent molecular sieves results in reduced mold cycle time as evidenced by the lower cooling time required to obtain a dimensionally stable part (compositions 13-16

versus composition 12). In addition, the type A molecular sieves (compositions 13, 14 and 16) are better than the type X molecular sieve (composition 15).

Figure 5 shows the addition of 1, 3 and 5 weight percent type 5A molecular sieve to compositions 17, 16 and 18 respectively, results in reduced mold cycle time as evidenced by the lower cooling time required to obtain a dimensionally stable part (compositions 16-18 versus composition 12). As the level of molecular sieve increased, the cooling time decreased. The results of composition 17 indicate that even at a level of 1 weight percent, an improvement in mold cycle time is obtained.

Table II

| Weight Percentages of Components[a] | | | | | | | |
|---|---|---|---|---|---|---|---|
| Composition | PPS[b] | Glass Fiber[c] | Molecular Sieve | Calcium Sulfate[d] | Organosilane[e] | PE[f] | $Li_2CO_3$[g] |
| 12[h] | 38 | 35 | -- | 25.25 | 0.5 | 0.25 | 1.0 |
| 13 | 35 | 35 | 3[i] | 25.25 | 0.5 | 0.25 | 1.0 |
| 14 | 35 | 35 | 3[j] | 25.25 | 0.5 | 0.25 | 1.0 |
| 15 | 35 | 35 | 3[k] | 25.25 | 0.5 | 0.25 | 1.0 |
| 16 | 35 | 35 | 3[l] | 25.25 | 0.5 | 0.25 | 1.0 |
| 17 | 37 | 35 | 1[l] | 25.25 | 0.5 | 0.25 | 1.0 |
| 18 | 33 | 35 | 5[l] | 25.25 | 0.5 | 0.25 | 1.0 |

(a) The weight percentages are based on the total weight of the components in the composition
(b) Ryton® Poly(phenylene sulfide), Phillips 66 Company; Grade PR-07 having nominal melt flow of 750-950 g/10 min.
(c) Owens Corning Grade 497
(d) United States Gypsum Co. Grade CA-5 having average particle size of 1.4 microns
(e) Union Carbide Y9194 organo functional polysulfide silane
(f) Marlex® high density polyethylene Grade TR-161, Phillips 66 Company having nominal melt index of 30 measured using ASTM D 1238-86 Condition 190/2.16
(g) Lithium carbonate
(h) Control
(i) Union Carbide Molecular Sieve type 3A powder
(j) Union Carbide Molecular Sieve type 4A powder
(k) Union Carbide Molecular Sieve type 13X powder
(l) Union Carbide Molecular Sieve type 5A powder

## Example III

In this example, the poly(phenylene sulfide) compositions of Examples I and II are compared to determine the effect of molecular sieves on mechanical and electrical insulation properties.

Each composition was compounded and pelletized as described in Example I. The pelletized product was injection molded using an 88 ton Kawaguchi molding machine (extruder temperature of 600-625F and mold temperature of 275-300F) into test specimens. The test specimens produced were tensile bars (dogbone shaped having dimensions of 1/16 inch thick by 4 inches long by 1/4 or 3/4 inch wide depending on the location on the specimen) and flexural bars (1/8 inch thick by 5 inches long by 1/2 inch wide).

The test specimens were evaluated according to the following test procedures:

| | |
|---|---|
| Tensile: | ASTM D 638 type IV bars, crosshead speed of 0.5 cm/min. |
| Flexural Modulus and Flexural Strength: | ASTM D 790 |
| IZOD impact strength, Notched and Unnotched: | ASTM D256 |
| Comparative Tracking Index (CTI): | UL746A |

The results of the evaluation are presented in Table III.

Table III

| | Tensile Strength(a) | | | | IZOD Impact Strength(b) | | |
|---|---|---|---|---|---|---|---|
| Composition | As Is | Annealed | Flexural Strength(a) | Flexural Modulus(a) | Notched | Unnotched | CTI(c) |
| 1(d) | 23,250 | 23,000 | 36,500 | 2,009,000 | 1.3 | 11.9 | -- |
| 2 | 22,600 | 25,000 | 37,300 | 2,179,700 | 1.3 | 9.7 | -- |
| 3 | 21,650 | 22,700 | 35,850 | 2,016,450 | 1.2 | 9.7 | -- |
| 4 | 20,400 | 22,250 | 35,150 | 2,015,268 | 1.3 | 9.8 | -- |
| 5 | 20,450 | 23,450 | 34,750 | 2,238,900 | 1.3 | 8.2 | -- |
| 6 | 22,300 | 23,300 | 35,900 | 2,051,700 | 1.2 | 9.1 | -- |
| 7 | 21,650 | 24,400 | 36,550 | 2,154,350 | 1.3 | 10.0 | -- |
| 8(d) | 22,050 | 21,850 | 37,600 | 2,289,200 | 1.4 | 10.8 | -- |
| 9(d) | 21,750 | 23,000 | 31,950 | 1,980,000 | 1.4 | 8.7 | -- |
| 10(d) | 23,100 | 24,550 | 34,100 | 1,970,000 | 1.4 | 9.7 | -- |
| 11 | 24,100 | 25,500 | 34,250 | 2,050,000 | 1.4 | 9.2 | -- |
| 12(d) | 13,950 | 13,800 | 24,900 | 2,324,400 | 1.1 | 3.1 | 200 |
| 13 | 15,700 | 14,600 | 27,550 | 2,627,650 | 1.2 | 3.2 | 225 |
| 14 | 14,900 | 14,100 | 27,100 | 2,597,050 | 1.1 | 3.1 | 225 |
| 15 | 15,550 | 15,400 | 28,300 | 2,675,800 | 1.1 | 3.1 | 225 |
| 16 | 15,350 | 13,850 | 27,200 | 2,548,050 | 1.2 | 2.9 | 250 |
| 17 | 15,650 | 15,550 | 27,200 | 2,556,200 | 1.2 | 3.1 | 250 |
| 18 | 16,050 | 13,850 | 27,600 | 2,727,050 | 1.1 | 3.4 | 250 |

(a) Units of psi
(b) Units of ft-$lb_f$/in.
(c) Comparative Tracking Index, units of Volts
(d) Control

The results in Table III, compositions 1-5 indicate that the addition of molecular sieve (compositions 2-5) produces comparable overall mechanical properties to the control (composition 1) and improved flexural modulus.

The results in Table III, compositions 1,4 and 6-8 indicate that the addition of different levels of molecular sieve (compositions 4, 6 and 7) produce comparable overall mechanical properties to the controls (compositions 1 and 8) and improved flexural modulus over composition 1. The higher glass fiber loading of composition 8 bas a positive effect on the mechanical properties.

The results in Table III, compositions 9-11 indicate the addition of a nucleating agent (composition 10 versus composition 9) generally improves all mechanical properties. The addition of a molecular sieve (composition 11 versus compositions 9 and 10) produces an even grater improvement in mechanical properties.

The results in Table III, compositions 12-16 indicate the addition of molecular sieve (compositions 13-16) produces improved tensile and flexural properties as well as improved CTI compared to the control (composition 12).

The results in Table III, compositions 12 and 16-18 indicate the addition of different levels of molecular sieve (compositions 16-18) all improve tensile and flexural properties as well as CTI compared to the control (composition 12).

The addition of molecular sieve to poly(arylene sulfide) compositions result in at least comparable mechanical properties to compositions without molecular sieve. When the poly(arylene sulfide) compositions contain calcium sulfate, the addition of molecular sieve results in improved mechanical properties and improved CTI.

## Example IV

In this example, eleven poly(phenylene sulfide) compositions (identified as compositions 19-29) are compared to determine the effect of molecular sieves on mechanical and electrical insulation properties. In addition, the effect of molecular sieves versus aluminum silicates on mechanical and electrical insulation properties is compared. The components of each composition are given in Table IV.

Each composition was compounded and pelletized as described in Example I and injection molded into test specimens as described in Example III. The test specimens were evaluated according to the test procedures set forth in Example III.

The results of the evaluation are presented in Table V.

Table IV

| Composition | PPS[b] | Fiber[c] | Molecular Sieve[d] | Aluminum Silicate | Calcium Sulfate[e] | Organosilane[f] | PE[g] | $Li_2CO_3$[h] |
|---|---|---|---|---|---|---|---|---|
| | Weight Percentages of Components[a] | | | | | | | |
| 19[i] | 38 | 35 | -- | -- | 25.25 | 0.5 | 0.25 | 1 |
| 20 | 37 | 35 | 1 | -- | 25.25 | 0.5 | 0.25 | 1 |
| 21 | 37 | 35 | 1[m] | -- | 25.25 | 0.5 | 0.25 | 1 |
| 22 | 35 | 35 | 3 | -- | 25.25 | 0.5 | 0.25 | 1 |
| 23 | 35 | 35 | 3[m] | -- | 25.25 | 0.5 | 0.25 | 1 |
| 24[i] | 58.75 | 40 | -- | -- | -- | -- | 0.25 | 1 |
| 25 | 55.75 | 40 | 3 | -- | -- | -- | 0.25 | 1 |
| 26 | 52.75 | 40 | 6 | -- | -- | -- | 0.25 | 1 |
| 27[i] | 58.75 | 40 | -- | -- | -- | -- | 0.25 | 1 |
| 28[j] | 55.75 | 40 | -- | 3[k] | -- | -- | 0.25 | 1 |
| 29[j] | 55.75 | 40 | -- | 3[l] | -- | -- | 0.25 | 1 |

(a) The weight percentages are based on the total weight of the components in the composition
(b) Compositions 19-23: Ryton® Poly(phenylene sulfide), Phillips 66 Company; Grade PR-07 having nominal melt flow of 750-950 g/10 min. with 5 wt. % PR-11 having nominal extrusion rate of 30-70. Extrusion rate is measured according to ASTM D 1238-86 Condition 315/5.0 modified to use a 345g weight instead of the 5 kg weight, using an orifice 1.25 inches in length and a 5 minute preheat time.
Compositions 24-29: Ryton® Poly(phenylene sulfide), Phillips 66 Company; Grade PR-14 having nominal melt flow of 75-125 g/10 min.
(c) Owens Corning Grade 497
(d) Union Carbide molecular sieve type 5A powder
(e) United States Gypsum Co. Grade CA-5 having average particle size of 1.4 microns
(f) Union Carbide Y9194 organofunctional polysulfide silane
(g) Marlex® high density polyethylene Grade TR-161, Phillips 66 Company having nominal melt index of 30 measured using ASTM D 1238-86 Condition 190/2.16
(h) Lithium carbonate
(i) Control
(j) Comparative composition
(k) Engelhard Aluminum silicate Grade Translink® 555
(l) Engelhard Aluminum silicate Grade Translink® HF900
(m) Molecular sieves were exposed to ambient atmosphere before use

Table V

| | Tensile Strength[a] | | | | IZOD Impact Strength[b] | | |
|---|---|---|---|---|---|---|---|
| Composition | As Is | Annealed | Flexural Strength[a] | Flexural Modulus[a] | Notched | Unnotched | CTI[c] |
| 19[d] | 14,050 | 15,500 | 22,900 | 2,200,000 | 1.1 | 3.0 | 175 |
| 20 | 14,600 | 15,500 | 24,400 | 2,200,000 | 1.1 | 3.0 | 200 |
| 21 | 14,800 | 14,150 | 24,200 | 2,250,000 | 1.0 | 3.0 | 200 |
| 22 | 14,950 | 13,750 | 24,950 | 2,360,000 | 1.2 | 3.2 | 275 |
| 23 | 15,000 | 16,700 | 27,000 | 2,410,000 | 1.4 | 3.5 | 275 |
| 24[d] | 18,500 | 17,450 | 25,500 | 1,816,900 | 1.3 | 4.3 | 175 |
| 25 | 21,600 | 21,900 | 31,200 | 1,983,200 | 1.0 | 4.5 | 200 |
| 26 | 22,000 | 21,900 | 30,200 | 2,017,000 | 1.2 | 4.4 | 200 |
| 27[d] | 18,100 | 16,900 | 24,750 | 1,866,300 | 1.2 | 4.0 | 150 |
| 28[e] | 16,300 | 16,100 | 21,700 | 1,934,200 | .96 | 2.9 | 150 |
| 29[e] | 16,400 | 16,500 | 21,400 | 1,952,800 | .94 | 3.0 | 150 |

(a) Units of psi
(b) Units of ft-$lb_f$/in.
(c) Comparative tracking index, units of volts
(d) Control
(e) Comparative composition

The results in Table V, compositions 19-23 indicate that the addition of molecular sieve (compositions 20-23) produces improved tensile and flexural properties as well as CTI with at least comparable impact properties compared to the control (composition 19). In addition, it appears that exposing the molecular sieves to ambient atmosphere before use (compositions 21 and 23) improves mechanical properties compared to non-exposed molecular sieves (compositions 20 and 22). Increasing the level of molecular sieves (compositions 22 and 23 versus compositions 20 and 21) improves CTI significantly and improves flexural properties.

The results in Table V, compositions 24-26 indicate the addition of molecular sieve to the particular composition (compositions 25 and 26) significantly improves tensile and fleural properties, improves CTI and produces comparable impact properties compared to the control (composition 24).

The results in Table V, composition 24, 25 and 27-29 indicate the addition of aluminium silicate (compositions 28 and 29) is detrimental to all mechanical properties and exhibit comparable CTI compared to the control (composition 27) while the addition of molecular sieve (composition 25) significantly improves tensile and flexural properties, improves CTI and produces comparable impact properties compared to the control (composition 24).

The addition of molecular sieve to poly(arylene sulfide) compositions results in improved tensile and flexural properties and improved CTI compared to compositions without molecular sieve. In addition, molecular sieves are vastly superior to ordinary aluminum silicates as molecular sieves improve properties while aluminium silicates are detrimental to properties.

## Claims

1. A molding composition consisting essentially of a mixture of
a) 40 - 80 weight percent of a cured poly(arylene sulfide) that, prior to curing, is an essentially linear, high molecular weight polymer having a melt flow of less than about 1000,
b) 25 - 60 weight percent glass fiber,
c) 0.1 - 15 weight percent molecular sieves, and
d) 0.01 - 2 weight percent organosilane;
wherein said molecular sieves are crystalline zeolites, and said poly(arylene sulfide) has been cured to a melt flow in a range of about 215 to about 400 prior to forming said mixture.
2. A molding composition consisting essentially of a mixture of
a) 40 - 80 weight percent of a cured poly(arylene sulfide) mixture having a melt flow in the range of about

200 to about 350, that prior to curing, consists essentially of (1) about 99 to about 75 weight percent of the total mixture of poly(arylene sulfide) that is an essentially linear, high molecular weight polymer having a melt flow of less than about 1000 and (2) about 1 to about 25 weight percent of the total mixture of poly-(arylene sulfide) that is an essentially linear, low molecular weight polymer having a melt flow in the range of about 3000 to about 8000,

b) 25 - 60 weight percent glass fiber,

c) 0.1 - 15 weight percent molecular sieves, and

d) 0.01 - 2 weight percent organosilane;

wherein said molecular sieves are crystalline zeolites, and said poly(arylene sulfide) has been cured prior to forming said mixture.

3. A molding composition consisting essentially of a mixture of

a) 25 - 65 weight percent of a cured poly(arylene suifide) that, prior to curing, is an essentially linear, low molecular weight polymer having a melt flow in the range of about 3000 to about 8000,

b) 20 - 50 weight percent glass fiber,

c) 10 - 40 weight percent calcium sulfate,

d) 0.1 - 15 weight percent molecular sieves, and

e) 0.01 - 2 weight percent organosilane;

wherein said molecular sieves are crystalline zeolites, and said poly(arylene sulfide) has been cured to a melt flow in a range of about 750 to about 950 prior to forming said mixture.

4. A molding composition consisting essentially of a mixture of

a) 40 - 80 parts by weight of a cured poly(arylene sulfide) that, prior to curing, is an essentially linear, high molecular weight polymer having a melt flow of less than about 1000,

b) 25 - 60 parts by weight glass fiber,

c) 0.1 - 15 parts by weight molecular sieves, and

d) 0.01 - 2 parts by weight organosilane;

wherein said molecular sieves are crystalline zeolites, and said poly(arylene sulfide) has been cured to a melt flow in a range of about 215 to about 400 prior to forming said mixture.

5. A molding composition consisting essentially of a mixture of

a) 40 - 80 parts by weight of a cured poly(arylene sulfide) mixture having a melt flow in the range of about 200 to about 350, that prior to curing, consists essentially of (1) about 99 to about 75 weight percent of the total mixture of poly(arylene sulfide) that is an essentially linear, high molecular weight polymer having a melt flow of less than about 1000 and (2) about 1 to about 25 weight percent of the total mixture of poly-(arylene sulfide) that is an essentially linear, low molecular weight polymer having a melt flow in the range of about 3000 to about 8000,

b) 25 - 60 parts by weight glass fiber,

c) 0.1 - 15 parts by weight molecular sieves, and

d) 0.01 - 2 parts by weight organosilane;

wherein said molecular sieves are crystalline zeolites, and said poly(arylene sulfide) has been cured prior to forming said mixture.

6. A molding composition consisting essentially of a mixture of

a) 25 - 65 parts by weight of a cured poly(arylene sulfide) that, prior to curing, is an essentially linear, low molecular weight polymer having a melt flow in the range of about 3000 to about 8000,

b) 20 - 50 parts by weight glass fiber,

c) 10 - 40 parts by weight calcium sulfate,

d) 0.1 - 15 parts by weight molecular sieves, and

e) 0.01 - 2 parts by weight organosilane;

wherein said molecular sieves are crystalline zeolites, and said poly(arylene sulfide) has been cured to a melt flow in a range of about 750 to about 950 prior to forming said mixture.

7. A molding composition according to one of claims 1 to 3 wherein said molecular sieve is present in an amount of about 1 to about 10 weight percent, in particular in an amount of about 2 to about 7 weight percent and is anhydrous.

8. A molding composition according to one of claims 4 to 6 wherein said molecular sieve is present in an amount of about 1 to about 10 parts by weight, in particular in an amount of about 2 to about 7 parts by weight and is anhydrous.

9. A molding composition according to claims 1, 2, 4 or 5 wherein said organosilane is an epoxy functional silane.

10. A molding composition according to claim 9 which further contains a nucleating agent, polyethylene, and hydrotalcite, in particular wherein said epoxy functional silane is gamma-glycidoxypropyltrimethoxysilane and said nucleating agent is poly(ether ether ketone).

11. A molding composition according to claim 10 wherein said glass fiber has a diameter of less than about 13 microns.

12. A molding composition according to claim 1 or 4 wherein said poly(arylene sulfide) is acid washed prior to curing, in particular wherein said acid is acetic acid.

13. A molding composition according to claim 3 or 6 wherein said organosilane has the formula

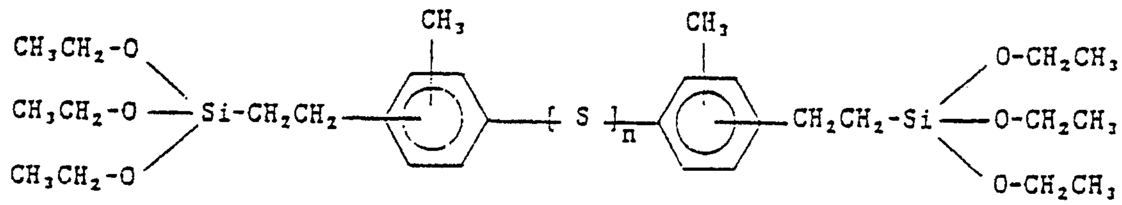

wherein the average value of n is about 2 to about 4, in particular wherein said organosilane has an average value of n of about 2.8.

14. A molding composition according to claim 13 which further contains polyethylene and lithium carbonate.

15. A molding composition according to one of the preceding claims wherein said poly(arylene sulfide) is poly(phenylene sulfide).

16. A process for making a poly(arylene sulfide) composition comprising curing an essentially linear, high molecular weight poly(arylene sulfide) having a melt flow of less than about 1000 to form a cured poly-(arylene sulfide) having a melt flow in the range of about 215 to about 400 and subsequently combining to form a mixture consisting essentially of:

a) 40 - 80 weight percent of said cured poly(arylene sulfide),
b) 25 - 60 weight percent glass fiber,
c) 0.1 - 15 weight percent molecular sieves, and
d) 0.01 - 2 weight percent organosilane;
wherein said molecular sieves are crystalline zeolites.

17. A process for making a poly(arylene sulfide) composition comprising curing (1) an essentially linear, high molecular weight poly(arylene sulfide) having a melt flow prior to curing of less than about 1000 and (2) an essentially linear, low molecular weight poly(arylene sulfide) having a melt flow prior to curing in the range of about 3000 to about 8000, forming a cured poly(arylene sulfide) mixture consisting essentially of about 99 to about 75 weight percent of the total mixture of poly(arylene sulfide) of said (1) and about 1 to about 25 weight percent of the total mixture of poly(arylene sulfide) of said (2), and subsequently combining to form a mixture consisting essentially of:

a) 40 - 80 weight percent of said cured poly(arylene sulfide) mixture having a melt flow in the range of about 200 to about 350,
b) 25 - 60 weight percent glass fiber,
c) 0.1 - 15 weight percent molecular sieves, and
d) 0.01 - 2 weight percent organosilane;
wherein said molecular sieves are crystalline zeolites.

18. A process for making a poly(arylene sulfide) composition comprising curing an essentially linear, low molecular weight poly(arylene sulfide) having a melt flow in the range of about 3000 to about 8000 to form a cured poly(arylene sulfide) having a melt flow in the range of about 750 to about 950 and subsequently combining to form a mixture consisting essentially of:

a) 25 - 65 weight percent of said cured poly(arylene sulfide),
b) 20 - 50 weight percent glass fiber,
c) 10 - 40 weight percent calcium sulfate,
d) 0.1 - 15 weight percent molecular sieves, and
e) 0.01 - 2 weight percent organosilane;
wherein said molecular sieves are crystalline zeolites.

19. A process for making a poly(arylene sulfide) composition comprising curing an essentially linear, high molecular weight poly(arylene sulfide) having a melt flow of less than about 1000 to form a cured poly-(arylene sulfide) having a melt flow in the range of about 215 to about 400 and subsequently combining to form a mixture consisting essentially of:

a) 40 - 80 parts by weight of said cured poly(arylene sulfide),
b) 25 - 60 parts by weight glass fiber,

c) 0.1 - 15 parts by weight molecular sieves, and

d) 0.01 - 2 parts by weight organosilane;

wherein said molecular sieves are crystalline zeolites.

20. A process for making a poly(arylene sulfide) composition comprising curing (1) an essentially linear, high molecular weight poly(arylene sulfide) having a melt flow prior to curing of less than about 1000 and (2) an essentially linear, low molecular weight poly(arylene sulfide) having a melt flow prior to curing in the range of about 3000 to about 8000, forming a cured poly(arylene sulfide) mixture consisting essentially of about 99 to about 75 weight percent of the total mixture of poly(arylene sulfide) of said (1) and about 1 to about 25 weight percent of the total mixture of poly(arylene sulfide) of said (2), and subsequently combining to form a mixture consisting essentially of:

a) 40 - 80 parts by weight of said cured poly(arylene sulfide) mixture having a melt flow in the range of about 200 to about 350,

b) 25 - 60 parts by weight glass fiber,

c) 0.1 - 15 parts by weight molecular sieves, and

d) 0.01 - 2 parts by weight organosilane;

wherein said molecular sieves are crystalline zeolites.

21. A process for making a poly(arylene sulfide) composition comprising curing an essentially linear, low molecular weight poly(arylene sulfide) having a melt flow in the range of about 3000 to about 8000 to form a cured poly(arylene sulfide) having a melt flow in the range of about 750 to about 950 and subsequently combining to form a mixture consisting essentially of:

a) 25 - 65 parts by weight of said cured poly(arylene sulfide),

b) 20 - 50 parts by weight glass fiber,

c) 10 - 40 parts by weight calcium sulfate,

d) 0.1 - 15 parts by weight molecular sieves, and

e) 0.01 - 2 parts by weight organosilane;

wherein said molecular sieves are crystalline zeolites.

22. A process according to claims 16, 17 or 18 wherein said molecular sieve is present in an amount of about 1 to about 10 weight percent, in particular wherein said molecular sieve is present in an amount of about 2 to about 7 weight percent and is anhydrous.

23. A process according to claims 19, 20 or 21 wherein said molecular sieve is present in an amount of about 1 to about 10 parts by weight, in particular wherein said molecular sieve is present in an amount of about 2 to about 7 parts by weight and is anhydrous.

24. A process according to one of claims 16, 17, 19 or 21 wherein said organosilane is an epoxy functional silane.

25. A process according to claim 24 to form a mixture further containing a nucleating agent, polyethylene, and hydrotalcite, in particular wherein said epoxy functional silane is a gamma-glycidoxypropyltrimethoxysilane and said nucleating agent is poly(ether ether ketone).

26. A process according to claim 25 wherein said glass fiber has a diameter of less than about 13 microns.

27. A process according to claim 16 or 19 wherein said poly(arylene sulfide) is acid washed prior to curing, in particular wherein said acid is acetic acid.

28. A process according to claim 18 or 21 wherein said organosilane has the formula

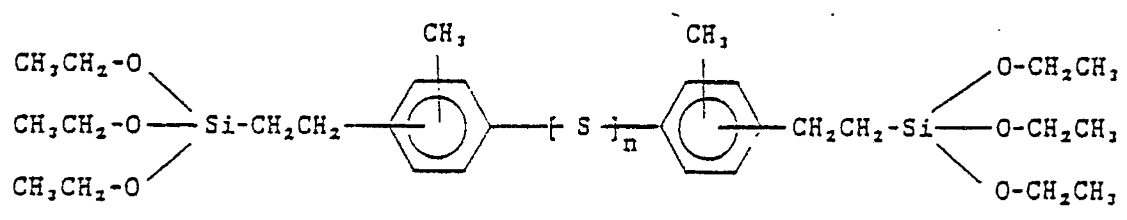

wherein the average value of n is about 2 to about 4, in particular wherein said organosilane has an average value of n of about 2.8.

29. A process according to claim 28 to form a mixture further containing polyethylene and lithium carbonate.

30. A process according to claims 16 to 29 wherein said poly(arylene sulfide) is poly(phenylene sulfide).

31. An article of manufacture comprising a molded article made with a composition of one of the claims 1 to 15.

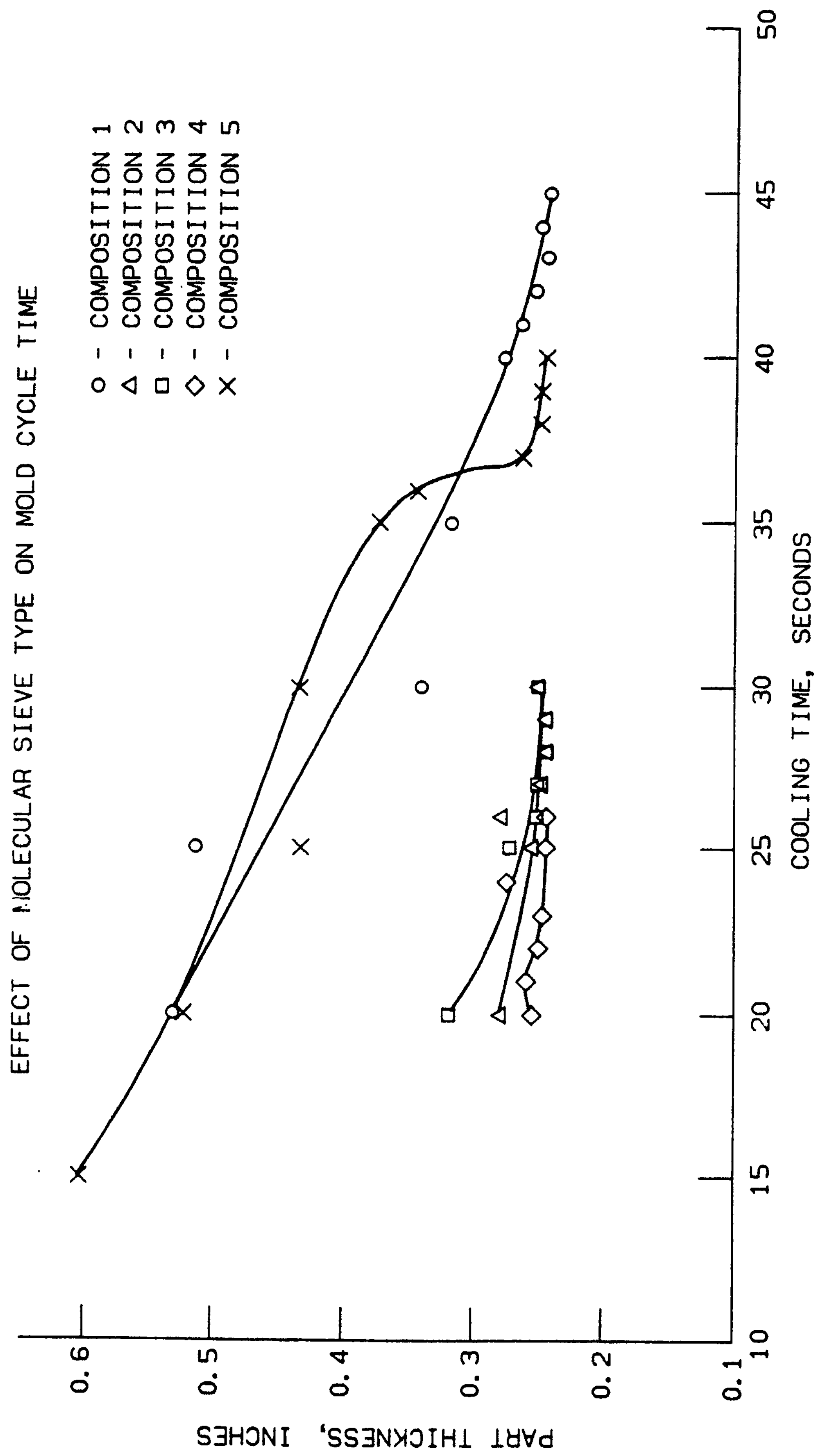
EFFECT OF MOLECULAR SIEVE TYPE ON MOLD CYCLE TIME
○ - COMPOSITION 1
△ - COMPOSITION 2
□ - COMPOSITION 3
◇ - COMPOSITION 4
× - COMPOSITION 5
PART THICKNESS, INCHES
0.6
0.5
0.4
0.3
0.2
0.1
10
15
20
25
30
35
40
45
50
COOLING TIME, SECONDS

FIG. 1

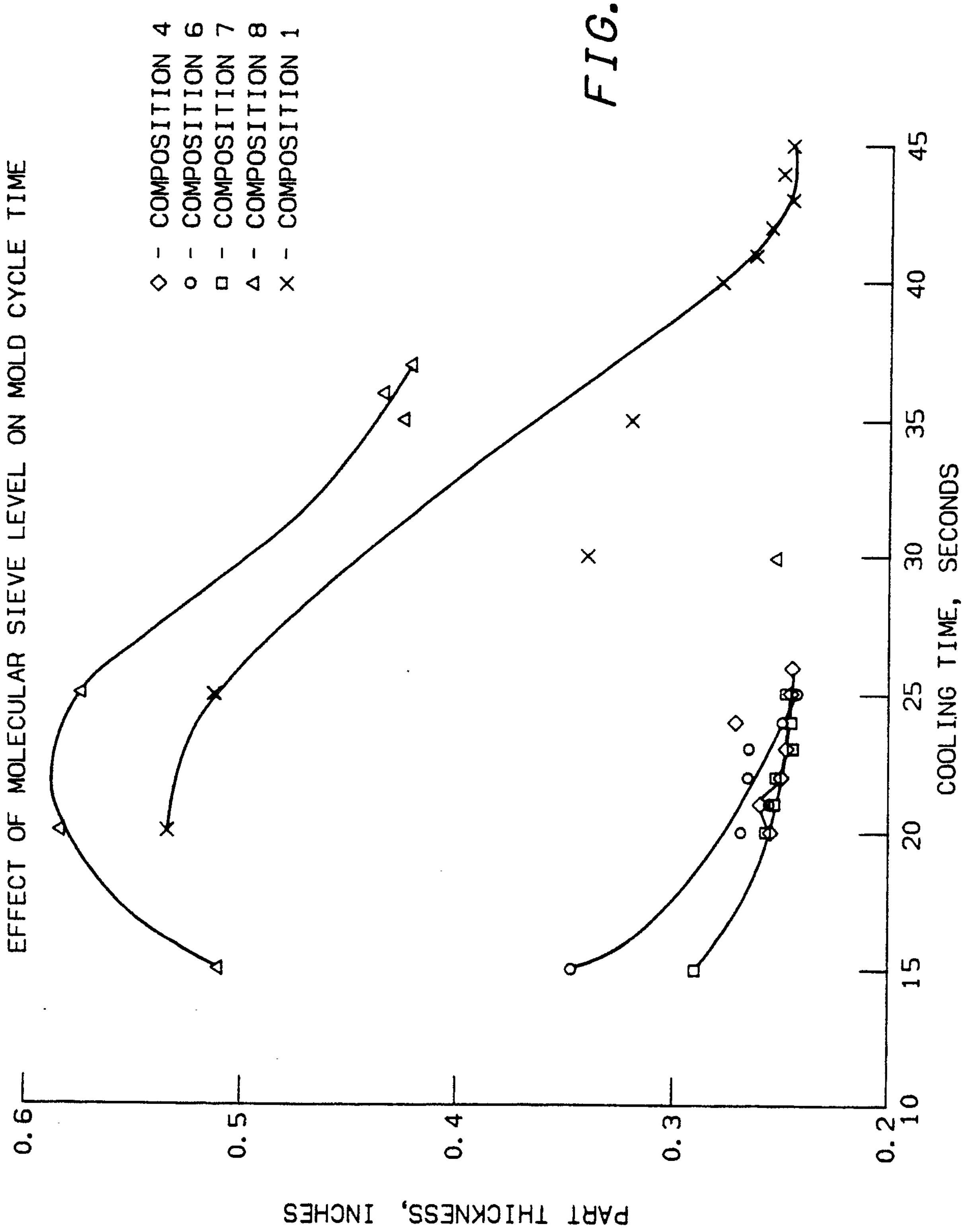
EFFECT OF MOLECULAR SIEVE LEVEL ON MOLD CYCLE TIME
◇ - COMPOSITION 4
○ - COMPOSITION 6
□ - COMPOSITION 7
△ - COMPOSITION 8
× - COMPOSITION 1
PART THICKNESS, INCHES
0.6
0.5
0.4
0.3
0.2
10
15
20
25
30
35
40
45
COOLING TIME, SECONDS

FIG. 2

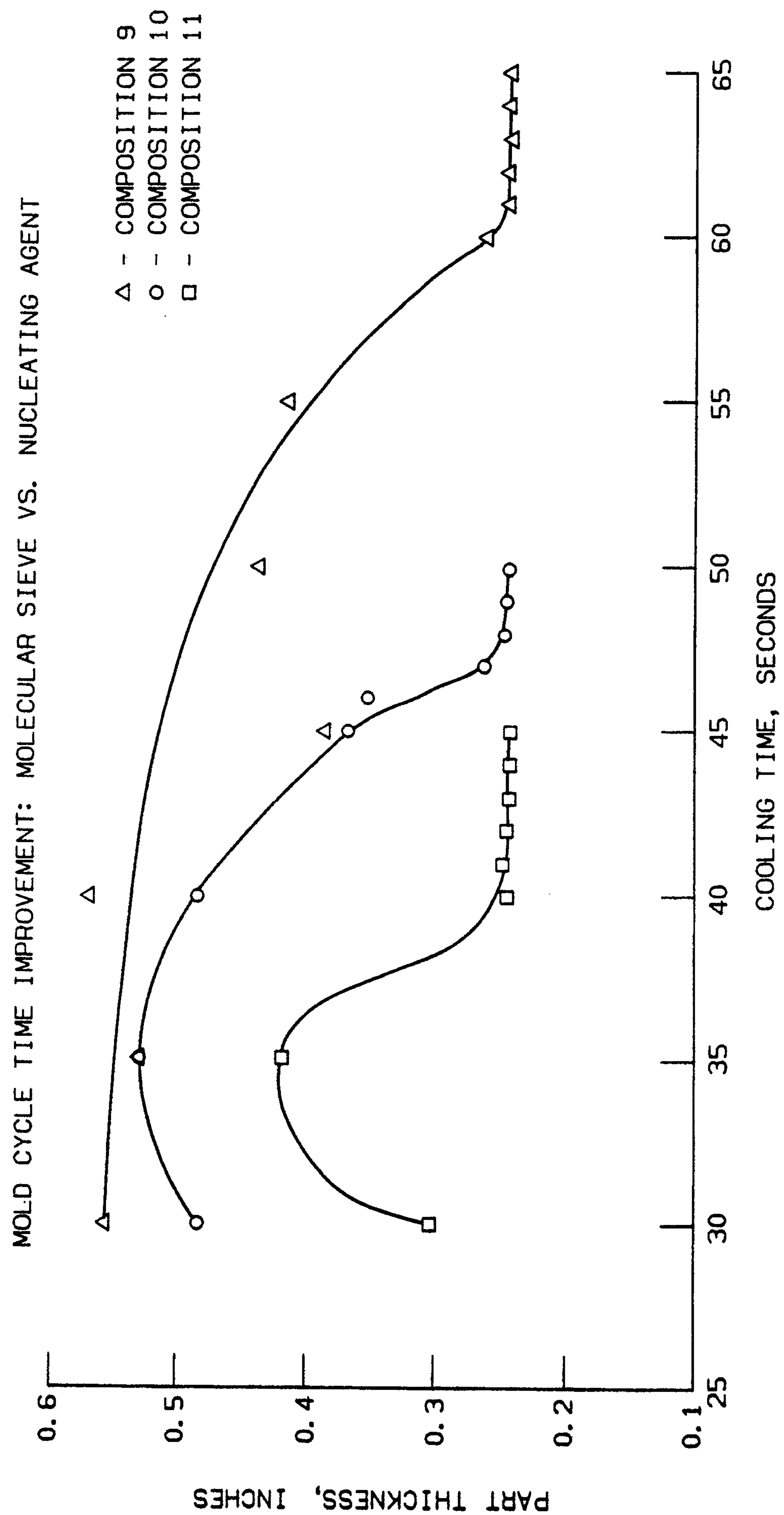
MOLD CYCLE TIME IMPROVEMENT: MOLECULAR SIEVE VS. NUCLEATING AGENT
Δ - COMPOSITION 9
○ - COMPOSITION 10
□ - COMPOSITION 11
PART THICKNESS, INCHES
0.1
0.2
0.3
0.4
0.5
0.6
COOLING TIME, SECONDS
25
30
35
40
45
50
55
60
65

FIG. 3

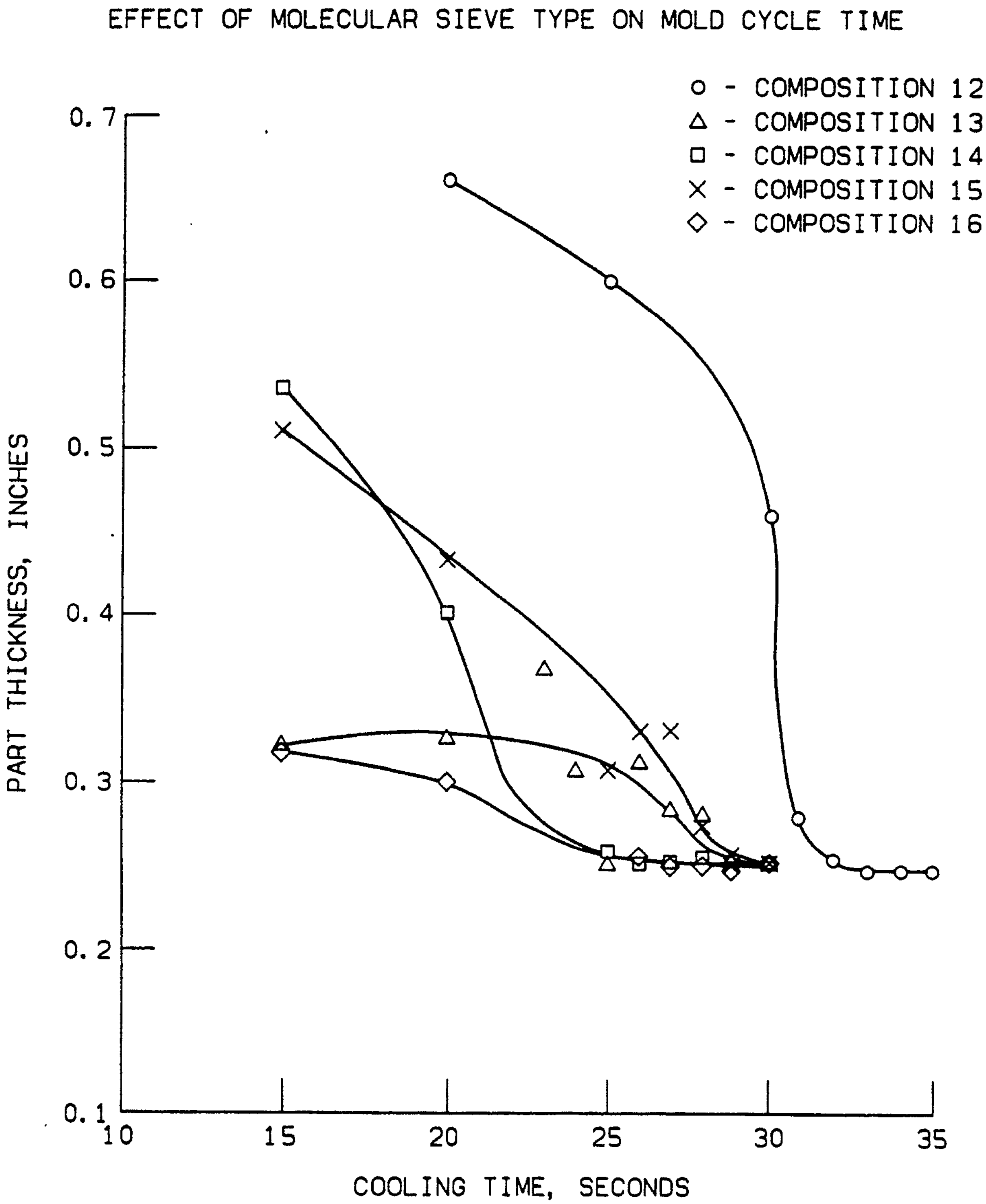
EFFECT OF MOLECULAR SIEVE TYPE ON MOLD CYCLE TIME
○ - COMPOSITION 12
△ - COMPOSITION 13
□ - COMPOSITION 14
× - COMPOSITION 15
◇ - COMPOSITION 16
PART THICKNESS, INCHES
0.7
0.6
0.5
0.4
0.3
0.2
0.1
10
15
20
25
30
35
COOLING TIME, SECONDS

FIG. 4

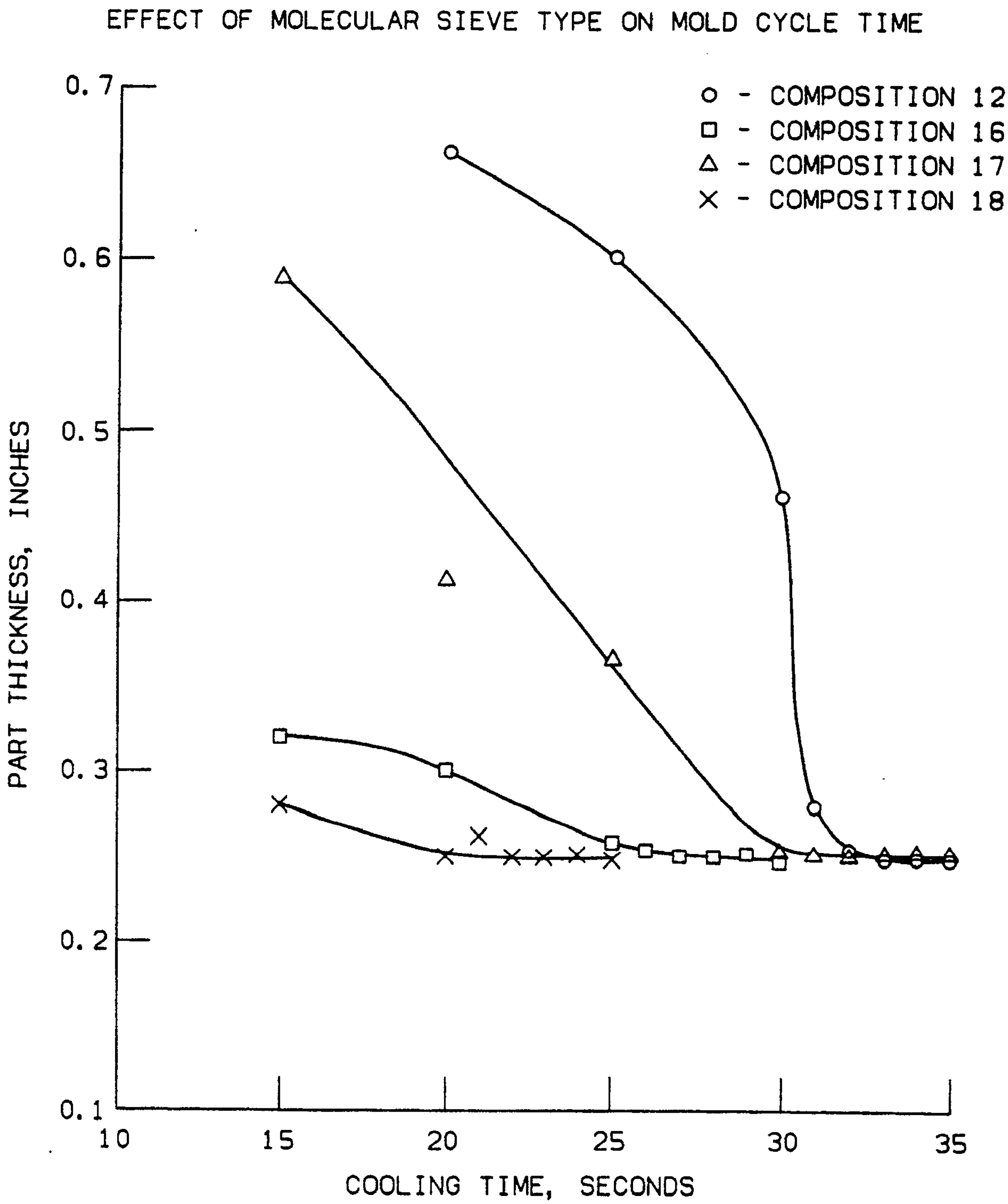
EFFECT OF MOLECULAR SIEVE TYPE ON MOLD CYCLE TIME
○ - COMPOSITION 12
□ - COMPOSITION 16
△ - COMPOSITION 17
× - COMPOSITION 18
PART THICKNESS, INCHES
0.7
0.6
0.5
0.4
0.3
0.2
0.1
10
15
20
25
30
35
COOLING TIME, SECONDS

*FIG. 5*

European Patent Office

# EUROPEAN SEARCH REPORT

Application Number

EP 90117549.7

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | EP - A1 - 0 147 692 (PHILLIPS PETROLEUM COMP.) * Claims * | 1-6,9, 10,14-21,24, 25,29-31 | C 08 L 81/02<br>C 08 K 13/02 |
| Y | DATABASE WPIL, no. 87-245 971 DERWENT PUBLICATIONS LTD., London, GB & JP-A-62-167 356 (MATSUSHITA ELEC. WORKS) (23-07-1987) * Abstract * | 1-8,15 -23, 30,31 | |
| Y | EP - A1 - 0 124 106 (PHILLIPS PETROLEUM COMP.) * Claims * | 1-6, 13,15-21,28, 30,31 | |
| A | EP - A1 - 0 087 145 (PHILLIPS PETROLEUM COMP.) * Claims; page 3, line 36; page 4, lines 11-23 * | 1-6, 9-11, 14-21, 24-26, 29-31 | **TECHNICAL FIELDS SEARCHED (Int. Cl.5)**<br>C 08 L 81/00<br>C 08 K |
| A | EP - A2 - 0 302 648 (POLYPLASTICS CO. LTD.) * Claims; page 4, lines 7-35 * | 1-6,9, 10,15-21,24, 25,30, 31 | |
| A | EP - A2 - 0 286 298 (KUREHA KAGAKU KOGYO KABUSHIKI KAISHA) * Claims; page 6, lines 8-14 * | 1-6,15 -21, 30,31 | |

The present search report has been drawn up for all claims

| Place of search | Date of completion of the search | Examiner |
|---|---|---|
| VIENNA | 04-12-1990 | WEIGERSTORFER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document